Europäisches Patentamt

European Patent Office

Office européen des brevets

(11) Publication number: **0 173 412**
**B1**

(12) **EUROPEAN PATENT SPECIFICATION**

(45) Date of publication of patent specification: **03.10.90**

(21) Application number: **85303568.1**

(22) Date of filing: **21.05.85**

(51) Int. Cl.⁵: **A 01 M 25/00**

(54) **Rodent bait protection box.**

(30) Priority: **22.08.84 US 643037**

(43) Date of publication of application:
**05.03.86 Bulletin 86/10**

(45) Publication of the grant of the patent:
**03.10.90 Bulletin 90/40**

(84) Designated Contracting States:
**AT BE CH DE FR GB IT LI LU NL SE**

(56) References cited:
**FR-A-2 505 141**
**US-A-3 965 609**
**US-A-4 026 064**
**US-A-4 400 904**
**US-A-4 453 337**

(73) Proprietor: **J.T. EATON & COMPANY, INC.**
**1393 East Highland Road**
**Twinsburg Ohio 44087 (US)**

(72) Inventor: **Baker, Stanley Z.**
**3115 Bremerton**
**Pepper Pike Ohio 44124 (US)**
Inventor: **Baker, Benjamin Harris**
**11771 Sperry**
**Chesterland Ohio 44145 (US)**
Inventor: **Baker, Bart Michael**
**4847 Foxwynde**
**Richmond Hts. Ohio 44143 (US)**

(74) Representative: **Crawford, Andrew Birkby et al**
**A.A. THORNTON & CO. Northumberland House**
**303-306 High Holborn**
**London WC1V 7LE (GB)**

Courier Press, Leamington Spa, England.

## Description

This invention relates to a rodent bait protection box.

A common method of exterminating rodents is to provide a supply of poisoned bait in an area frequented by such rodents. Such poisons are known and highly effective. Poisons, however, pose a distinct threat to the safety of domesticated animals and/or small children. As poisons are often presented in an appealing edible format, they present an attraction to children and domestic animals. Thus, it is desirable to place the bait in an enclosed baiting station as inaccessible as possible to all but rodents.

In US—A—4400904 there is generally disclosed a rodent bait protection box comprising an enclosure having top, bottom and enclosure wall means, rodent bait retention area means, rodent entrance passageway means defined inwardly along a first enclosure wall means of the enclosure wall means, and central passageway means intersecting the entrance passageway means and extending from the entrance passageway means to the bait retention area means, the bait retention area means being accessible from the central passageway means.

More particularly, the rodent bait protection box of the aforesaid US—A—4400904 has its enclosure fashioned of H configuration with the transverse element thereof having a zone thereof central of its length constituting the rodent bait retention area means access to which is provided from either end of that transverse element which constitutes the central passageway means, the opposite parallel elements of the H-shaped enclosure both defining the rodent entrance passageway means, so that rodents can enter the enclosure from each end of each parallel element and proceed via the corresponding end of the intersecting central passageway means to the rodent bait retention area located centrally therealong.

In accordance with the present invention as claimed the aforesaid generally disclosed rodent bait protection box is characterised in that the enclosure is generally triangularly-shaped with the enclosure wall means extending vertically between the top and the bottom wall means, the bait retention area means comprise first and second segregated rodent bait retention areas within the enclosure and each having at least first and second partition wall means between the top and bottom wall means, each of the first partition wall means is parallel to and spaced inwardly from the first enclosure wall means to define the rodent entrance passageway means inwardly along the first enclosure wall means, and and the second partition wall means is parallel to and spaced apart from one another to define the central passageway means extending between the first and second rodent bait retention areas, and by the provision of means providing each of the first and second bait retention areas with an entrance accessible from the central passageway means.

One advantage of a rodent bait protection box constructed in accordance with the present invention is that its interior configuration takes a maze-like format, whereby a rodent must appropriately enter a number of passageways before reaching the bait. Accordingly, a child or larger animal reaching into such a station is protected from the poison by its inability to reach the bait through the entrances of the trap due to the turns in the path to the bait.

By making the present rodent bait protection box generally triangularly shaped, it is suitable for placement inconspicuously in a room corner which is advantageous since room corners are often unused or concealed, and thus are favoured locations for rodent traps.

Attention is also drawn to US—A—3965609 which discloses a rodent bait protection box comprising an L-shaped enclosure with each leg of the L being open to the other and being fashioned as a passageway along one side of which is defined a bait feeding station accessible only to the head of a rodent passing through the passageways.

In order that the invention may be well understood there will now be described a preferred embodiment thereof, given by way of example, reference being made to the accompanying drawings, in which:

Figure 1 is a perspective, exploded view of a rodent bait protection box in accordance with the preferred embodiment of the present invention;

Figure 2 is a plan view of the rodent bait protection box shown in Figure 1, in which a portion of the cover has been sectionally removed to show the interior passageways and bait retention areas of the box;

Figure 3 is a side elevational view of the same box looking in the direction from left to right in Figure 2; and

Figure 4 is an end elevational view of the same box looking in the direction from bottom to top in Figure 2.

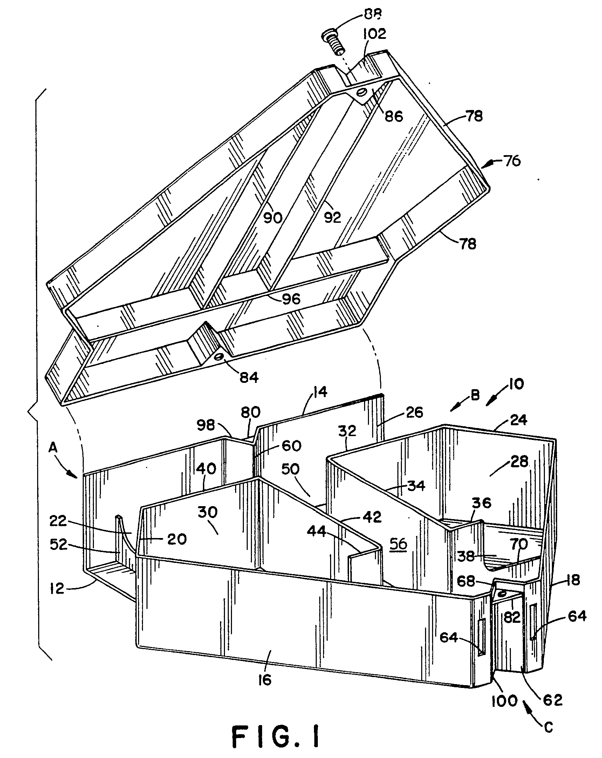

Referring first to Figure 1, there is shown a rodent bait protection box 10 of a generally triangular planar cross-section, having corners A, B and C, comprised of a floor 12 and first, second and third enclosure walls 14, 16, 18 all extending upright therefrom.

The corner A is truncated by providing a wall segment 20, of similar height to the enclosure walls 14, 16, 18 and a rodent access opening 22 between the enclosure walls 14 and 16. Likewise, the corner B is truncated, with a wall segment 24 and a rodent access opening 26. The rodent access openings 22 and 26 are located adjacent the enclosure wall 14.

The box 10 and associated enclosure walls 14, 16, 18 may be of any durable rigid material, and in the preferred embodiment, may be made of rigid plastic, approximately 0.0625 inches (1.58 mm) thick. The height of the enclosure walls is chosen to be of sufficient size to allow a rodent to pass through the station unimpeded or, in this embodiment, about three inches (7.62 cm) in height. The length of the enclosure walls is determined by the size of the rodents entering the box, and the need to provide them with areas large enough for them to freely pass. In this embodiment, the enclosure wall 14 is about 12 inches (30.48 cm) in length, and the enclosure walls 16 and 18 are each about 10 inches (25.4 cm) in length.

Within the box 10, rodent bait retention areas 28 and 30 are provided as locations for holding a poisoned rodent bait (not shown). The rodent bait retention area 28 is bounded by the enclosure wall 18, the wall segment 24 and partition walls 32, 34 and 36. The partition walls are of the same height and formed of the same material as the enclosure walls 14, 16 and 18, and are located within the box 10. The partition wall 36 is provided with a bait retention area opening 38, thereby providing access to the bait retention area 28 from the exterior of that area. In like manner, the rodent bait retention area 30 is bounded by the enclosure wall 16, the wall segment 20, and partition walls 40, 42 and 44. The partition wall 44 is provided with a bait retention area opening 46.

The partition walls 32 and 40 are located in parallel spaced relationship with the enclosure wall 14. The combination of the partition walls 32 and 40 with the enclosure wall 14 define an entrance passageway 50 which extends along a generally straight path between the access openings 22 and 26, thereby allowing each opening to be perceivable by the rodent from the other. Just inside the access openings 22 and 26, in the entrance passageway 50, are anti-contamination barriers 52 and 54. These barriers, made from the same material as the walls of the box, extend upwardly from the floor 12, and between the partition walls 32 and 40 to the enclosure wall 14 to form a lip preventing the flow of liquid from entering the station. The barriers 52 and 54 extend upwardly from the floor to a height which prevents a maximum amount of liquid flow through the station, while allowing rodents to pass by the barriers.

The partition walls 34 and 42 perpendicularly intersect the partition walls 32 and 40, respectively, and extend from the partition walls 32 and 40 generally towards the corner C. The partition walls 34 and 42 are in parallel spaced relationship, defining between them a central passageway 56, extending perpendicularly from the entrance passageway 50 towards the corner C.

At the intersection of the entrance passageway 50 and the central passageway 56, a rodent directing arrangement is provided which, in the present embodiment, is comprised of an outcropping 60, extending partially into the entrance passageway 50 from the enclosure wall 14 and extending from the floor 12 to the top of the wall 14. The outcropping 60 is a wedge-shaped cross-section extension of the enclosure wall 14 which urges rodents following the entrance passageway 50 along the enclosure wall to be directed towards the central passageway 56.

In accordance with the preferred embodiment, the corner C is truncated by a wall segment 62.

The wall segment 62 approximately corresponds in width to the central passageway 56, and is arranged between the enclosure walls 16 and 18, generally perpendicular to the path of rodent travel along the central passageway 56. The wall segment 62, is provided with rodent inaccessible openings. In the preferred embodiment, these openings are vertical slots 64 in the wall segment 62, extending from a point in the wall segment above the floor 12 to prevent water contamination through the slots, towards the upper edge of the wall segment. The slots serve to encourage the rodent to enter the otherwise enclosed central passageway 56 and travel towards the corner C of the box 10, proximate to the poison bait retention area openings 38 and 46. It will be appreciated that many other arrangements may be used to convince a rodent that there is an egress at the end of the enclosed central passageway 56, other than slot openings. For example, grid work patterns cut in the plastic, screening, variously shaped holes, transparent panels, etc., would be effective to accomplish the same object, namely to provide the illusion to the rodent of an exit, while not allowing the rodent to pass therethrough.

A rodent directing arrangement may also be located on the wall segment 62 between the slot openings, such as is provided by an outcropping 68. The outcropping 68 may be in the form of a wedge similar in size and construction to the outcropping 60 on the enclosure wall 14. Thus, as the rodent begins to feel its way along the wall segment 62, it is urged towards the poisoned bait retention area openings 38 and 46, respectively.

The bait retention area openings 46 and 38 are provided in the partition walls 44 and 36 and adjacent the enclosure walls 16 and 18, respectively. Thus, as the rodent follows either of the enclosure walls 16 or 18 after confronting the outcropping 68, it follows the wall directly into the bait retention area to consume the bait.

The retention area openings are provided with lips 70 and 72. The lips 70 and 72 serve the dual purpose of protecting against contamination from exterior water flow and retaining the bait within the retention area.

The box 10 includes a top wall which, in the preferred embodiment, is provided by a removable cover 76. The cover 76 is provided with an edge 78, which corresponds to the perimeter of the box, overlapping the enclosure walls 14, 16, 18 to provide a waterproof enclosure. The cover is preferably secured via tabs 80 and 82 on the enclosure walls, complimentary tabs 84 and 86 on the cover, and threaded fasteners 88. The cover is also provided with cover support members 90, 92 and 96 which laterally overlie the partition walls 34, 42, 32 and 40 to provide strength and support for the cover to prevent its breaking and collapse into the box.

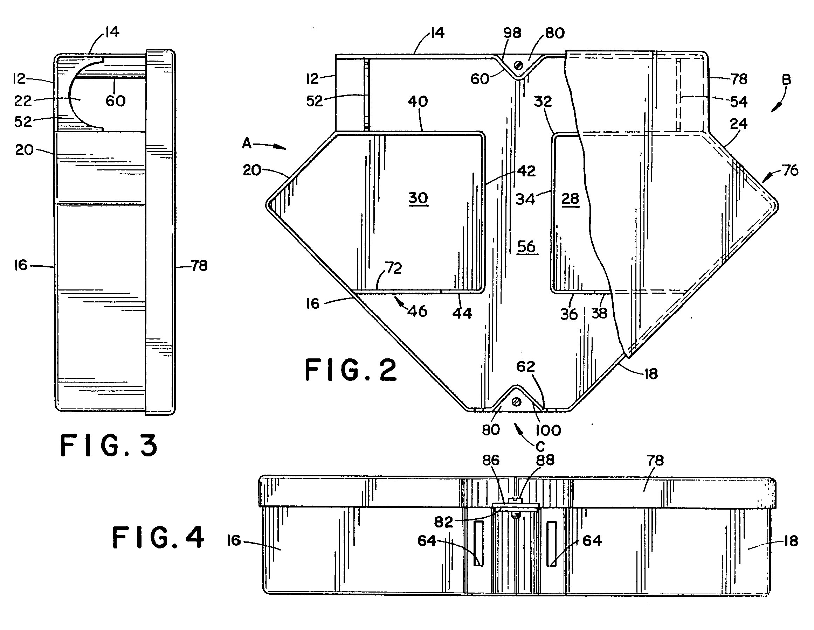

In the preferred embodiment the wall segment 62 and enclosure wall 14 are moulded to provide the wedge-shaped rodent directing outcroppings 60 and 68, thereby providing wedge-shaped recesses 98 and 100 on the exterior of the box. The tabs 80 and 82 may be inset in these recesses to provide a flush fit and to obviate the need for protruding tabs, which may break away. The cover 76 is also moulded for the tabs 84 and 86 to underlie wedge-shaped recesses such as is shown by a face 102 in Figure 1. This provides for the complimentary points of the tabs to facially engage one another when the cover is in place, as is shown in Figure 4 with regard to the tabs 82 and 86.

The entire device is of a shape suitable for placement in a room corner in order to allow for placement of the device as unobtrusively as possible. Accordingly, the enclosure walls 16 and 18 form a 90° angle to fit securely in position against unintentional movement which might jar or spill the poison inside the trap.

The arrangement of the wall segments 20 and 24, and the rodent access openings 22 and 26 advantageously positions the openings 22 and 26 across the path of travel of the rodent. Thus, a rodent following a room wall will be encouraged by the wall segment 20 or 24 to enter the corresponding access opening 22 or 26 which extends across his path of movement.

The invention has been described with reference to the preferred embodiment. It is our intention to include modifications and alterations insofar as they come within the scope of the appended claims.

**Claims**

1. A rodent bait protection box comprising an enclosure having top (76), bottom (12) and enclosure (14, 16, 18) wall means, rodent bait retention area means (28, 30), rodent entrance passageway means (50) defined inwardly along a first (14) enclosure wall means of the enclosure wall means (14, 16, 18), and central passageway (56) intersecting the entrance passageway means (50) and extending from the entrance passageway means (50) to the bait retention area means (28, 30) the bait retention area means (28, 30) being accessible from the central passageway means (56), characterised in that the enclosure is generally triangularly-shaped with the enclosure wall means (14, 16, 18) extending vertically between the top (76) and the bottom (12) wall means, the bait retention area means (28, 30) comprise first (28) and second (30) segregated rodent bait retention areas within the enclosure and each having a least first (32, 40) and second (34, 42) partition wall means beween the top (76) and bottom (12) wall means, each of the first partition wall means (32, 40) is parallel to and spaced inwardly from the first enclosure wall means (14) to define the rodent entrance passageway means (50) inwardly along the first enclosure wall means (14), and the second partition wall means (34, 42) are parallel to and spaced apart from one another to define the central passageway means (56) extending between the first (28) and second (30) rodent bait retention areas, and by the provision of means providing each of the first (28) and second (30) bait retention areas with an entrance (38, 46) accessible from the central passageway means (56).

2. A box as claimed in Claim 1, wherein the enclosure wall means (14, 16, 18) include second and third enclosure wall means (16, 18) in diverging relation from the first enclosure wall means (14) and having an end (62) spaced from the end of the central passageway means (56), and means (64) providing opening means in the end (62) of the second and third enclosure wall means (16, 18) in alignment with the central passageway means (56).

3. A box as claimed in Claim 2, wherein the opening means (64) comprise a pair of slots (64) in the second and third enclosure wall means (16, 18).

4. A box as claimed in Claim 2 or Claim 3, wherein the second and third enclosure wall means (16, 18) form a 90° angle therebetween.

5. A box as claimed in any of Claims 2 to 4, including rodent directing means (68) at the end (62) of the second and third enclosure wall means (16, 18).

6. A box as claimed in Claim 5, wherein the rodent directing means (68) includes an outcropping (68) extending from the end (62) of the second and third enclosure wall means (16, 18) towards the central passageway means (56) whereby rodents are urged along either of the second and third enclosure wall means (16, 18).

7. A box as claimed in any of the preceding claims, wherein each of the bait retention areas (28, 30) includes third partition wall means (36, 44) extending laterally outwardly from the corresponding second partition wall mans (34, 42) at the end of the central passageway means (56), the third partition wall means (36, 44) providing each of the bait retention areas (28, 30) with the entrance (38, 46) including an opening (38, 46) through the corresponding third partition wall means (36, 44).

8. A box as claimed in any of the preceding claims, wherein the top wall means (76) is a removable cover (76).

9. A box as claimed in Claim 8, wherein the removable cover (76) is releasably secured to the enclosure wall means (14, 16, 18).

10. A box as claimed in any of the preceding claims, including anti-contamination means (52, 54) at the rodent entrance passageway means (50).

11. A box as claimed in Claim 10, wherein the anti-contamination means (52, 54) includes a raised lip member (52, 54) across each end of the rodent entrance passageway means (50).

12. A box as claimed in any of the preceding claims, including bait retaining means (70, 72) at each bait retention area entrance (38, 46).

13. A box as claimed in Claim 12, wherein the bait retaining means (70, 72) includes a raised lip member (70, 72) across the corresponding rodent access entrance (38, 46).

14. A box as claimed in any of the preceding claims, including rodent directing means (60) along the first enclosure wall means (14) and extending outwardly therefrom into the entrance passageway means (50) whereby rodents are directed away from the first enclosure wall means (14) toward the central passageway means (56).

15. A box as claimed in Claim 14, wherein the rodent directing means (60) includes a wedge-shaped outcropping (60) extending from the first enclosure wall means (14) partially into the entrance passageway means (50) at the intersection of the entrance passageway means (50) and the central passageway means (56).

**Patentansprüche**

1. Schutzbehälter für Köder für Nagetiere, mit Deck- (76), Boden- (12) und Umfriedungswandmitteln (14, 16, 18), mit Rückhaltebereichsmitteln (28, 30) für die Köder für Nagetiere, mit Einlaßdurchgangsmitteln (50) für die Nagetiere, die innen längs erster Umfriedungswandmittel (14) der Umfriedungswandmittel (14, 16, 18) ausgebildet sind, und mit mittigen Durchgangsmitteln (56), die die Einlaßdurchgangsmittel (50) schneiden, und die sich von den Einlaßdurchgangsmitteln (50) zu den Rückhaltebereichsmitteln (28, 30) erstrecken, wobei die Rückhaltebereichsmittel (28, 30) für die Köder von den mittigen Durchgangsmitteln (56) her zugänglich sind, dadurch gekennzeichnet, da die Umfriedung im wesentlichen dreiecksförmig ist, wobei sich die Umfriedungswandmittel (14, 16, 18) vertikal zwischen den Deck- (76) und Bodenwandmitteln (12) erstrecken, wobei die Rückhaltebereichsmittel (28, 30) für die Köder innerhalb der Umfriedung erste (28) und zweite (30), gesonderte Rückhaltebereiche für die Köder für die Nagetiere aufweisen, und wobei jede zumindest erste (32, 40) und zweite (34, 42) Trennwandmittel zwischen den Deck- (76) und Bodenwandmitteln (12) aufweisen, wobei jede der ersten Trennwandmittel (32, 40) parallel zu und nach innen beabstandet von den ersten Umfriedungswandmitteln (14) ist, wodurch die Einlaßdurchgangsmittel (50) für die Nagetiere innen entlang der ersten Umfriedungsmittel (14) umgrenzt sind, und wobei die zweiten Trennwandmittel (34, 42) parallel zueinander verlaufen und voneinander beabstandet sind, wodurch die mittigen Durchgangsmittel (56) umgrenzt sind, die sich zwischen ersten (28) und zweiten (30) Rückhaltebereich für die Köder für Nagetiere erstrecken, und daß Mittel vorgesehen sind, die die ersten (28) und zweiten (30) Rückhaltebereiche für die Köder für Nagetiere mit je einem Einlaß (38, 46) versehen, die jeweils von den mittigen Durchgangsmitteln (56) aus zugänglich sind.

2. Behälter nach Anspruch 1, bei dem die Umfriedungswandmittel (14, 16, 18) von den ersten Umfriedungswandmitteln (14) aus divergierende zweite und dritte Umfriedungswandmittel (16, 18) un ein vom Ende der mittigen Durchgangsmittel (56) beabstandetes Ende (62) aufweisen, und ferner Mittel (64) aufweisen, die Öffnungsmittel im Ende (62) der zweiten und dritten Umfriedungswandmittel (16, 18) schaffen, die in Ausrichtung mit den mittigen Durchgangsmitteln (56) stehen.

3. Behälter nach Anspruch 2, bei dem die Öffnungsmittel (64) ein Paar an Schlitzen (64) in den zweiten und dritten Umfreidungswandmitteln (16, 18) aufweisen.

4. Behälter nach Anspruch 2 oder 3, bei dem die zweiten und dritten Umfriedungswandmittel (16, 18) einen Winkel von 90° zwischen sich einschließen.

5. Behälter nach einem der Ansprüche 2 bis 4, mit am Ende (62) der zweiten und dritten Umfriedungswandmittel (16, 18) angeordneten Richtungsmitteln (68) für die Nagetiere.

6. Behälter nach Anspruch 5, bei dem die Richtungsmittel (68) für die Nagetiere einen sich vom Ende (62) der zweiten und dritten Umfriedungswandmittel (16, 18) in Richtung der mittigen Durchgangsmittel (56) erstreckenden Vorsprung aufweisen, durch den die Nagetiere entweder entlang der zweiten oder der dritten Umfriedungswandmittel (16, 18) gedrängt werden.

7. Behälter nach einem der vorhergehenden Ansprüche, bei dem jeder der Rückhaltebereiche (28, 30) für die Köder dritte Trennwandmittel (36, 44) enthält, die sich am Ende der mittigen Durchgangsmittel (56) seitlich nach außen von den entsprechenden zweiten Trennwandmitteln (34, 42) wegerstrecken, wobei die dritten Trennwandmittel (36, 44) jeden der Rückhaltebereiche (28, 30) für die Köder mit einem Eingang (38, 46) versehen, der eine Öffnung (38, 46) durch die entsprechenden dritten Trennwandmittel (36, 44) aufweist.

8. Behälter nach einem der vorhergehenden Ansprüche, bei dem die Deckwandmittel (76) aus einem abnehmbaren Deckel (76) bestehen.

9. Behälter nach Anspruch 8, bei dem der abnehmbare Deckel (76) lösbar an den Umfriedungswandmitteln (14, 16, 18) befestigt ist.

10. Behälter nach einem der vorhergehenden Ansprüche mit anti-Verunreinigungsmitteln (52, 54) an den Einlaßdurchgangsmitteln (50) für die Nagetiere.

11. Behälter nach Anspruch 10, bei dem die anti-Verunreinigungsmittel (52, 54) ein erhöhtes Schwellenelement (52, 54) aufweisen, das sich jeweils über die Enden der Eingangsdurchläßmittel (50) für die Nagetiere erstreckt.

12. Behälter nach einem der vorhergehenden Ansprüche, mit Rückhaltemittel (70, 72) für den Köder an jedem Einlaß (38, 46) für den Köderrückhaltebereich.

13. Behälter nach Anspruch 12, bei dem die Rückhaltemittel (70, 72) für die Köder ein erhöhtes Schwellenelement (70, 72) aufweist, das sich über den entsprechenden Einlaß (38, 46), der für die Nagetiere zugänglich ist, erstreckt.

14. Behälter nach einem der vorhergehenden Ansprüche mit Richtungsmitteln (60) für die Nagetiere entlang der ersten Umfriedungswandmittel (14), die sich nach außen von diesen in die Einlaßdurchgangsmittel (50) hinein erstrecken, wodurch die Nagetiere von den ersten Umfriedungswandmitteln (14) weggerichtet auf die mittigen Durchgangsmittel (56) abgelenkt werden.

15. Behälter nach Anspruch 14, bei dem die Richtungsmittel (60) für die Nagetiere eine kantenförmige Ausbuchtung (60) aufweisen, die sich von den ersten Umfriedungswandmitteln (14) teilweise in die Einlaßdurchgangsmittel (50) hinein erstrecken, und zwar am Kreuzungspunkt der Einlaßdurchgangsmittel (50) und den mittigen Durchgangsmitteln (56).

## Revendications

1. Boîte de protection d'appâts pour rongeurs, comprenant une enceinte ayant des parois supérieure (76), inférieure (12) et latérales (14, 16, 18), un dispositif (28, 30) formant une zone destinée à contenir des appâts pour rongeurs, un passage (50) d'entrée de rongeurs délimité vers l'intérieur le long d'une première (14) des parois latérales (14, 16, 18) et un passage central (56) recoupant le passage d'entrée (50) et disposé du passage d'entrée (50) au dispositif (28, 30) formant une zone de retenue d'appâts, ce dispositif (28, 30) étant accessible à partir du passage central (56), caractérisée en ce que l'enceinte a une forme triangulaire dont les parois latérales (14, 16, 18) sont disposées verticalement entre les parois supérieure (76) et inférieure (12), le dispositif (28, 30) formant la zone de retenue d'appâts comprenant une première (28) et une seconde (30) zone séparées de retenue d'appâts pour rongeurs formées dans l'enceinte et ayant chacune au moins une première cloison (32, 40) et une seconde cloison (34, 42) de séparation placées entre les parois supérieure (76) et inférieure (12), chacune des premières cloisons de séparation (32, 40) étant parallèle à la première paroi latérale (14) et distante de celle-ci vers l'intérieur afin que le passage (50) d'entrée de rongeurs soit délimité vers l'intérieure le long de la première paroi latérale (14), et les secondes cloisons de séparation (34, 42) sont parallèles l'une à l'autre et distantes l'une de l'autre afin qu'elles délimitent le passage central (56), entre la première (28) et la seconde (30) zone de retenue d'appâts, un dispositif formant une entrée (38, 46) pour chacune des première (28) et seconde (30) zones de retenue d'appâts, l'entrée étant accessible à partir du passage central (56).

2. Boîte selon la revendication 1, dans laquelle les parois latérales (14, 16, 18) comprennent une seconde et une troisième paroi latérale (16, 18) qui divergent par rapport à la première paroi latérale (14) et ayant une extrémité (62) qui est distante de l'extrémité du passage central (56), et un dispositif (64) formant une ouverture à l'extrémité (62) de la seconde et de la troisième paroi latérale (16, 18) dans l'alignement du passage central (56).

3. Boîte selon la revendication 2, dans laquelle les ouvertures (64) sont sous forme de deux fentes (64) formées dans la seconde et la troisième paroi latérale (16, 18).

4. Boîte selon la revendication 2 ou 3, dans laquelle la seconde et la troisième paroi latérale (16, 18) font un angle de 90° l'une avec l'autre.

5. Boîte selon l'une quelconque des revendications 2 à 4, comprenant un dispositif (68) destiné à diriger les rongeurs, à l'extrémité (62) des seconde et troisième parois latérales (16, 18).

6. Boîte selon la revendication 5, dans laquelle le dispositif (68) destiné à diriger les rongeurs comprend une partie pointue (68) partant de l'extrémité (62) des seconde et troisième paroi latérales (16, 18) vers le passage central (56), si bien que les rongeurs sont incités à se déplacer le long de l'une des seconde et troisième parois latérales (16, 18).

7. Boîte selon l'une quelconque des revendications précédentes, dans laquelle chacune des zones (28, 30) de retenue d'appâts comporte une troisième cloison de séparation (36, 44) dépassant latéralement vers l'extérieure par rapport à la seconde cloison correspondante de séparation (34, 42) à l'extrémité du passage central (56), la troisième cloison de séparation (36, 44) formant, pour chaque zone (28, 30) de retenue d'appâts, l'entrée (38, 46) qui comporte une ouverture (38, 46) formée dans la troisième cloison correspondante de séparation (36, 44).

8. Boîte selon l'une quelconque des revendications précédentes, dans laquelle la paroi supérieure (76) est un couvercle amovible (76).

9. Boîte selon la revendication 8, dans laquelle le couvercle amovible (76) est fixé de façon amovible sur les parois latérales (14, 16, 18).

10. Boîte selon l'une quelconque des revendications précédentes, comprenant un dispositif (52, 54) anti-contamination dans le passage (50) d'entrée des rongeurs.

11. Boîte selon la revendication 10, dans laquelle le dispositif anti-contamination (52, 54) comporte une lèvre (52, 54) formée en saillie à chaque extrémité du passage (50) d'entrée des rongeurs.

12. Boîte selon l'une quelconque des revendications précédentes, contenant un dispositif (70, 72) de retenue d'appâts à chaque entrée (38, 46) de zone de retenue d'appâts.

13. Boîte selon la revendication 12, dans laquelle le dispositif (70, 72) de retenue d'appâts comporte une organe (70, 72) formant une lèvre en saillie à l'entrée correspondante (38, 46) d'accès des rongeurs.

14. Boîte selon l'une quelconque des revendications précédentes, contenant un dispositif (60) destiné à diriger les rongeurs le long de la première paroi latérale (14) et dépassant vers l'extérieur de celle-ci dans le passage d'entrée (50), si bien que les rongeurs sont dirigés à distance de la première paroi latérale (14) vers le passage central (56).

15. Boîte selon la revendication 14, dans laquelle le dispositif (60) destiné à diriger les rongeurs comporte une pointe (60) en forme de coin dépassant de la première paroi latérale (14) partiellement dans le passage d'entrée (50) à l'intersection du passage d'entrée (50) et du passage central (56).

FIG. I

FIG.3

FIG.2

FIG.4

EP 0 173 412 B1